# EUROPEAN PATENT APPLICATION

(11) **EP 4 729 157 A1**
(43) Date of publication of application: **22.04.2026**
(21) Application number: 24823621.8
(22) Date of filing: 04.06.2024
(51) Int. Cl.: B01D 59/42

(54) **METHOD FOR SEPARATING CARBON ISOTOPES USING ELECTROMIGRATION**

(30) Priority: 16.06.2023 KR 20230077600; 30.05.2024 KR 20240070968
(71) Applicant: Institute for Basic Science, Yuseong-gu Daejeon 34126 (KR); Ulsan National Institute of Science and Technology, Ulju-gun, Ulsan 44919 (KR)
(72) Inventor: RODNEY, Ruoff, Daejeon 34126 (KR); SEONG, Won Kyung, Daejeon 34126 (KR)
(74) Representative: Kraus & Lederer PartGmbB
(86) International application number: PCT/KR2024/007612
(87) International publication number: WO 2024/258101

(57) **Abstract**

The present invention relates to an apparatus for separating carbon isotopes and a method for separating carbon isotopes using same. Specifically, the apparatus for separating carbon isotopes according to an aspect of the present invention comprises: a pocket part which stores a carbon mixture in the center portion thereof; an electrode connection part at both ends; and a graphite precipitation part between the pocket part and the electrode connection part, wherein the apparatus for separating carbon isotopes is formed of a magnetic metal, and the apparatus for separating carbon isotopes may efficiently separate and concentrate carbon isotopes through electromigration.

## Description

### [Technical Field]

The present invention relates to methods for separating and concentrating carbon isotopes using electromigration.

### [Background Art]

An isotope separation technology is a technology of separating a specific isotope from an isotope mixture formed of the same elements having different atomic masses.

Meanwhile, carbon includes two types of stable isotopes of carbon-12 (¹²C) having a natural component ratio of 98.89% and carbon-13 (¹³C) having a natural component ratio of 1.1%, and since each isotope is a very useful material in various industrial fields, it is one of very important raw materials as an isotope separation and concentration subject. However, the technology which is currently used for carbon isotope separation requires expensive equipment and specialized skills, or uses materials harmful to the environment and the human body, and has low separation efficiency.

### [Disclosure]

### [Technical Problem]

An object of the present invention is to provide a separation apparatus which may efficiently separate and concentrate carbon isotopes and a method for separating carbon isotopes using the same.

### [Technical Solution]

In one general aspect, an apparatus for separating carbon isotopes includes: a pocket part which stores a carbon mixture in a center portion thereof; an electrode connection part at both ends; and a graphite precipitation part between the pocket part and the electrode connection part, wherein the apparatus for separating carbon isotopes is formed of a magnetic metal.

The magnetic metal may be nickel or cobalt.

The apparatus for separating carbon isotopes may further include a joule heating apparatus connected to the electrode connection part.

In another general aspect, a method for separating carbon isotopes includes: connecting an electrode connection part of the apparatus for separating carbon isotopes to an electrode of a joule heating apparatus; adding a carbon mixture including ¹²C and ¹³C to a pocket part of the apparatus for separating carbon isotopes and performing joule heating to dissolve the carbon mixture; and precipitating graphite through electromigration.

A ¹²C content in the precipitated graphite may be 16 at% or more of a ¹²C content in the carbon mixture.

A temperature gradient decreasing toward both ends in the pocket part may be formed by the joule heating.

A temperature of the pocket part may be 1300°C to 1400°C, and a temperature of the graphite precipitation part may be 800°C to 1,200°C.

The electromigration may be performed for 20 to 60 hours.

### [Advantageous Effects]

According to the method for separating carbon isotopes using electromigration of the present invention, well-aligned graphite may be produced, and also carbon isotopes may be separated and concentrated economically and environmentally friendly. Specifically, since the carbon isotope separation method according to an embodiment does not use materials harmful to the human body and the environment, it is environmentally friendly, and also, since its process is simple and has high energy efficiency, the method is expected to be advantageous for application in actual industrial sites.

### [Description of Drawings]

FIG. 1 is a photograph of an apparatus for separating carbon isotopes according to an exemplary embodiment.
FIG. 2 is a photograph of the apparatus for separating carbon isotopes connected to a joule heating apparatus according to an exemplary embodiment.
FIG. 3 is a photograph of the apparatus for separating carbon isotopes after performing electromigration according to an exemplary embodiment.
FIG. 4 is a temperature gradient graph for areas a to e indicated in FIG. 3.
FIG. 5 is a Raman spectrum of areas a to e indicated in FIG. 3.
FIG. 6 is a boundary image of precipitated graphite area and magnetic metal (nickel) area observed with a scanning electron microscope after performing electromigration according to an exemplary embodiment.
FIG. 7 is a graph showing a ¹³C content (at%) of a carbon mixture source and a ¹³C content of a graphite precipitation part after performing electromigration in Examples 1 to 10.

### [Best Mode]

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limits and the lower limits in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

In the present specification, "joule heating" refers to a process of generating heat by a current flow through a conductor.

In the present specification, "electromigration" refers to a phenomenon in which when a current is applied to a metal, atoms move along a current in the metal.

Hereinafter, the present disclosure will be described in detail. However, it is only illustrative, and the present disclosure is not limited to the specific exemplary embodiment which is illustratively described.

An embodiment of the present invention provides an apparatus allowing separation and concentration of carbon isotopes using electromigration, and a method for separating carbon isotopes using the same.

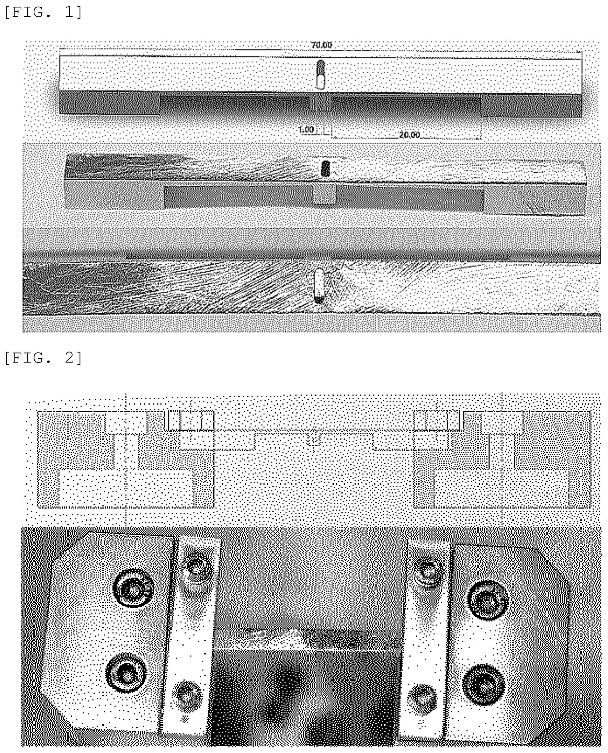

The apparatus for separating carbon isotopes according to an embodiment (FIG. 1) may include: a pocket part which is formed of a magnetic metal and stores a carbon mixture in a center portion thereof; an electrode connection part at both ends; and a graphite precipitation part between the pocket part and the electrode connection part.

The magnetic metal may be used without limitation as long as it is a magnetic metal having high solubility in carbon, and as a non-limiting example, may be nickel or cobalt.

The apparatus for separating carbon isotopes according to an embodiment may further include a joule heating apparatus connected to the electrode connection part (FIG. 2) .

Another embodiment of the present invention provides a carbon isotope separation method using the carbon isotope separation apparatus described above.

A method for separating carbon isotopes according to an embodiment may include: connecting an electrode connection part of the apparatus for separating carbon isotopes described above to an electrode of a joule heating apparatus; adding a carbon mixture including ¹²C and ¹³C to a pocket part of the apparatus for separating carbon isotopes and performing joule heating to dissolve the carbon mixture; and precipitating graphite through electromigration.

The ¹²C content in the precipitated graphite may be 1 at% or more, 2 at% or more, 5 at% or more, 10 at% or more, or 16 at% or more and 95 at% or less, 92 at% or less, or 90 at% or less of the ¹²C content in the carbon mixture. That is, according to the method for separating carbon isotopes according to an embodiment, ¹²C which is a lighter isotope is diffused more rapidly through the metal by electromigration and may be precipitated at a concentrated content as compared with the carbon mixture source, and it is expected that pure ¹³C and ¹²C may be separated by performing the separation method repeatedly.

According to the method for separating carbon isotopes according to an embodiment, a temperature gradient decreasing toward both ends in the pocket part may be formed by the joule heating, and the graphite precipitation part may refer to a section in which carbon atoms moving by electromigration are precipitated by a decreasing temperature gradient.

Herein, when the joule heating using a direct current is performed, graphite may be precipitated only in the graphite precipitation part in the negative electrode direction based on the pocket part, and when an alternate current is used, graphite may be precipitated in both graphite precipitation parts based on the pocket part.

During the electromigration, the temperature of the pocket part may be in a temperature range in which carbon may be dissolved, and may be, for example, 1,300°C to 1,400°C or 1,300°C to 1,350°C, and the temperature of the graphite precipitation part may be 800°C to 1,200°C, 900°C to 1,200°C, or 900°C to 1,100°C.

The electromigration may be performed for 20 to 60 hours, 30 to 60 hours, or 40 to 60 hours and may be performed under an argon atmosphere.

Hereinafter, the exemplary embodiments described above will be described in detail through the following examples. However, the following examples are only for illustration, and do not limit the scope of a right.

The physical properties of the examples were measured as follows:

### 1. Scanning electron microscope (SEM)

A graphite precipitation area was characterized under the conditions of 10 kV electron acceleration voltage and 0.8 nA beam current, with a scanning electron microscope (FEI Verios 460).

### 2. Raman spectrum

The process was performed in a mapping mode with a 532 nm laser source, x100 objective, 10% (~3mW) laser output, 1 accumulation, and acquisition time for 0.5 seconds, using a confocal Raman spectroscope (Horiba LabRAM HR Evolution), analysis was performed with an OriginPro software, and the resulting spectrum is shown.

### [Example 1]

A nickel metal bulk having a purity of 99.9 wt% (Shaanxi Super Metal Materials Co. Limited) was processed in the form of an apparatus for separating carbon isotopes (FIG. 1). After the apparatus for separating carbon isotopes formed of nickel was annealed under the atmosphere of argon:hydrogen = 1:3, both ends were connected to an electrode holder of a joule heating device (FIG. 2).

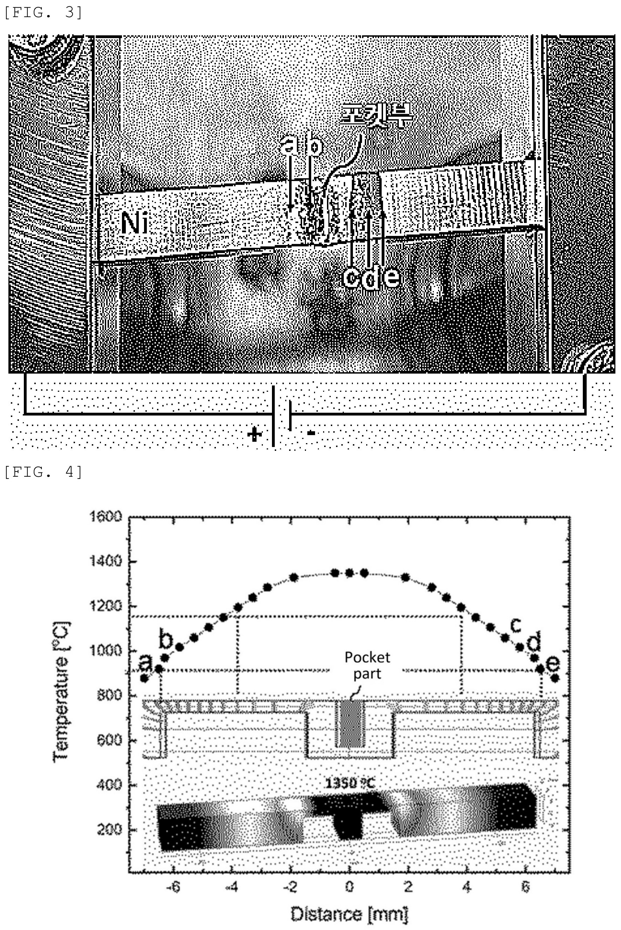

Thereafter, a carbon mixture source in which ¹²C carbon powder (Alfa Aesar) and ¹³C carbon powder (Cambridge Isotope Laboratories Inc.) were mixed at a weight ratio of 10/90 was ball milled, and then added to the pocket part of the apparatus for separating carbon isotopes. Thereafter, a direct current was applied under an argon atmosphere to perform joule heating, and electromigration was performed for 50 hours while the temperature of the pocket part was set to 1350°C (FIG. 3). The temperature was monitored with a pyrometer which was focused on the lower area of the pocket part through a side window of a furnace.

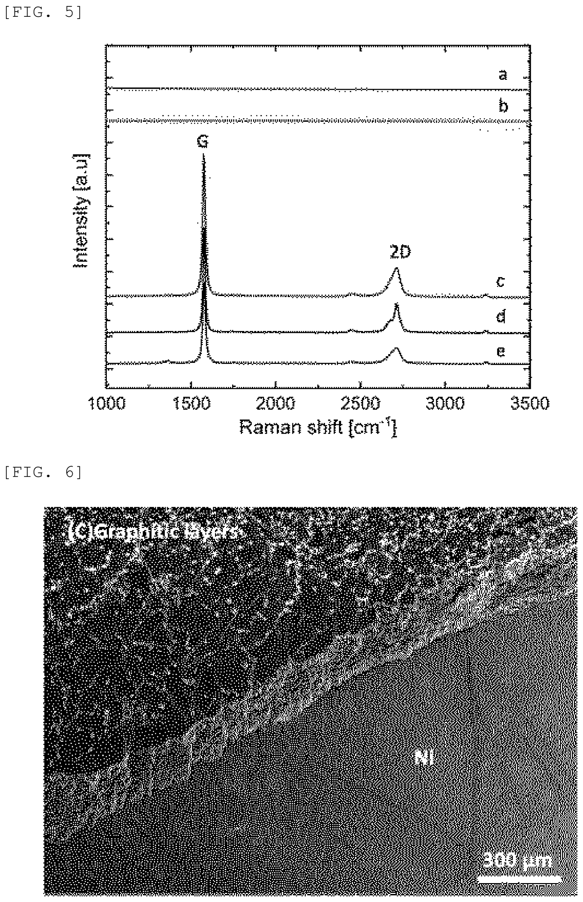

The photograph of the apparatus for separating carbon isotopes after performing the electromigration is shown in FIG. 3, the temperature gradient graph and the Raman spectrum of areas a to e indicated in FIG. 3 are shown in FIGS. 4 and 5, respectively, and the results of scanning electron microscope measurement of area c are shown in FIG. 6.

Referring to FIG. 4, it was found that a temperature gradient decreasing toward both ends based on the pocket part was formed, and referring to FIG. 5, it was confirmed that G and 2D peaks which are the Raman spectrum peaks of graphite were observed only in areas c~d. That is, it was confirmed that graphite was precipitated only in a temperature decreasing area (c~d) corresponding to a negative electrode direction based on the pocket part, and it was found that carbon was diffused by electromigration, and graphite was precipitated in a temperature decreasing area.

### [Examples 2 to 5]

The process was performed in the same manner as in Example 1, except that the isotope ratio (¹²C/¹³C) of the carbon mixture source was changed from 10/90 to 30/70, 50/50, 70/30, and 90/10, respectively.

### [Example 6]

The process was performed in the same manner as in Example 1, except that a cobalt metal bulk having a purity of 99.95 wt% (Shaanxi Super Metal Materials Co. Limited) was used instead of a nickel metal as the material of the apparatus for separating carbon isotopes.

### [Examples 7 to 10]

The process was performed in the same manner as in Example 6, except that the isotope ratio (¹²C/¹³C) of the carbon mixture source was changed from 10/90 to 30/70, 50/50, 70/30, and 90/10, respectively.

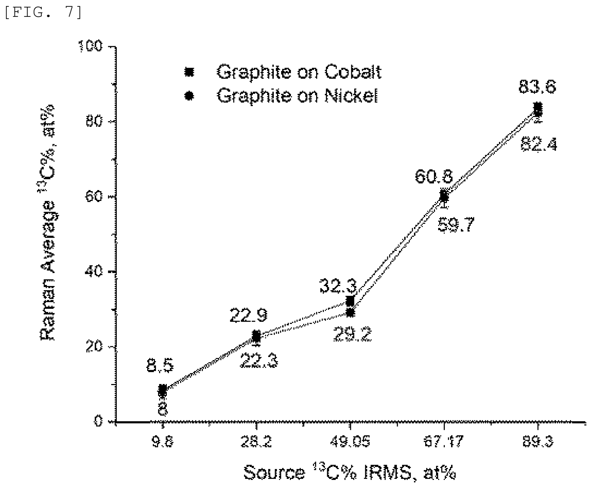

Isotope ratio mass spectrometry (IRMS) of the ¹²C/¹³C carbon mixture source at the weight ratios of 10/90, 30/70, 50/50, 70/30, and 90/10 used in the examples was performed to calculate a ¹³C content (at%), and the results are shown in the following Table 1. In addition, after performing the electromigration in Examples 1 to 10, the ¹³C content (at%) was calculated from the results of the Raman spectrum of the graphite precipitation part (Nano Lett. 2009, 9, 12, 4268-4272) and compared with the ¹³C content (at%) of the carbon mixture source, and the results are shown in FIG. 7.

**[Table 1]**

| Carbon mixture source | IRMS | |
|---|---|---|
| (¹²C/¹³C) | 12C (at%) | 13C(at%) |
| 10/90 | 10.70 | 89.30 |
| 30/70 | 32.83 | 67.17 |
| 50/50 | 50.95 | 49.05 |
| 70/30 | 71.80 | 28.20 |
| 90/10 | 90.20 | 9.80 |

Referring to FIG. 7, it was found that the ¹³C content included in graphite precipitated by the electromigration was decreased as compared with the initial carbon mixture source. That is, it was confirmed that ¹²C which is a lighter isotope was diffused more rapidly through the metal by the electromigration, and was able to be precipitated at a concentrated content as compared with the carbon mixture source, and it is expected that pure ¹³C and ¹²C may be separated by performing the present experiment repeatedly.

Hereinabove, although the present invention has been described by specific exemplary embodiments, they have been provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to the above-described exemplary embodiments, and the following claims as well as all modifications equal or equivalent to the claims are intended to fall within the scope and spirit of the invention.

## Claims

1. An apparatus for separating carbon isotopes comprising: a pocket part which stores a carbon mixture in a center portion thereof; an electrode connection part at both ends; and a graphite precipitation part between the pocket part and the electrode connection part,
wherein the apparatus for separating carbon isotopes is formed of a magnetic metal.

2. The apparatus for separating carbon isotopes of claim 1, wherein the magnetic metal is nickel or cobalt.

3. The apparatus for separating carbon isotopes of claim 1, further comprising: a joule heating apparatus connected to the electrode connection part.

4. A method for separating carbon isotopes, the method comprising: connecting an electrode connection part of the apparatus for separating carbon isotopes of claim 1 to an electrode of a joule heating apparatus; adding a carbon mixture including ¹²C and ¹³C to a pocket part of the apparatus for separating carbon isotopes and performing joule heating to dissolve the carbon mixture; and precipitating graphite through electromigration.

5. The method for separating carbon isotopes of claim 4, wherein a ¹²C content in the precipitated graphite is 16 at% or more of a ¹²C content in the carbon mixture.

6. The method for separating carbon isotopes of claim 4, wherein a temperature gradient decreasing toward both ends in the pocket part is formed by the joule heating.

7. The method for separating carbon isotopes of claim 6, wherein a temperature of the pocket part is 1300°C to 1400°C, and a temperature of the graphite precipitation part is 800°C to 1,200°C.

8. The method for separating carbon isotopes of claim 4, wherein the electromigration is performed for 20 to 60 hours.
